# EUROPÄISCHE PATENTSCHRIFT

(11) **EP 1 352 768 B1**
(45) Veröffentlichungstag und Bekanntmachung des Hinweises auf die Patenterteilung: **12.11.2008**
(21) Anmeldenummer: 03007826.5
(22) Anmeldetag: 04.04.2003
(51) Int. Cl.: B60J 7/04, B60J 7/16, B60J 7/08

(54) **Öffnungsfähiges Dach für ein Kraftfahrzeug**
Open roof for motor vehicle
Toit ouvrant pour vehicule automobile

(30) Priorität: 11.04.2002 DE 10215969
(43) Veröffentlichungstag der Anmeldung: 15.10.2003
(73) Patentinhaber: Webasto AG, 82131 Stockdorf (DE)
(72) Erfinder: De Gaillard, Francois, 85390 Mouilleron en Pareds (FR); De Waal, Martin, 1566 TS Assendelft (NL); Guicheteau, Jean-Luc, 49300 Cholet (FR); Kimoto, Izumi, Saeki-gun 739-0413 Hiroshima-ken (JP); Kölbl, Michael, 82061 Neuried (DE); Mitterbauer, Peter, 4810 Gmunden (AT); Pollak, Martin, 82178 Puchheim (DE); Righetti, Claudio Ivano, 10139 Torino (IT); Schönauer, Miriam, 85405 Nandlstadt (DE); Ueki, Sigeru, 739-2115 Higashihiroshima-City (JP); Vecchioni, Bernhard, Oxford, Michigan 48371 (US)
(74) Vertreter: Schwan - Schwan - Schorer

(56) Entgegenhaltungen:
- EP-A- 0 235 616
- FR-A- 2 745 766
- FR-A- 2 767 755
- GB-A- 2 194 759
- US-A- 4 750 778
- US-A- 4 805 956
- US-A- 5 056 857
- US-A- 5 098 148
- US-A- 5 906 408

## Beschreibung

Die vorliegende Erfindung betrifft ein Kraftfahrzeug mit einer Fahrerkabine und einer hinter der Fahrerkabine angeordneten Ladefläche, die vorne von einer Vorderwand und seitlich von Seitenwänden begrenzt ist, wobei die Fahrerkabine ein öffnungsfähiges Dach mit einer zwischen einer Schließstellung und einer Öffnungsstellung verstellbaren Dachabdeckung sowie eine Rückwand aufweist, die bezüglich der Fahrerkabine um eine in Fahrzeugquerrichtung verlaufende Achse schwenkbar ist.

Aus der GB 2 194 759 A ist ein Kraftfahrzeug mit Fahrerkabine und hinter der Fahrerkabine angeordneter Ladefläche bekannt, bei welchem die Fahrerkabine eine zwischen einer Schließstellung und einer Öffnungsstellung verstellbare Dachabdeckung und eine von einer Heckscheibe gebildete Rückwand aufweist, die scharnierartig klappbar miteinander verbunden sind. Die Heckscheibe ist bezüglich der Fahrerkabine um eine in Fahrzeugquerrichtung verlaufende Achse schwenkbar. In der Öffnungsstellung ist die Dachabdeckung auf die Heckscheibe geklappt, und die Dachabdeckung und die Heckscheibe sind in horizontaler Ausrichtung auf der Ladefläche abgelegt.

In US 5 098 148 ist ein Pickup-Fahrzeug beschrieben ist, bei dem die Dachabdeckung der Fahrerkabine und die eine Heckscheibe aufweisende Rückwand der Fahrerkabine starr miteinander verbunden sind und als eine Einheit ausgehend von der Schließstellung, in welcher die Rückwand im wesentischen senkrecht orientiert ist, mittels einer Schwenkbewegung um etwa 180° in die Öffnungsstellung gebracht wird, wobei in der Öffnungsstellung die Rückwand wiederum vertikal orientiert ist, während die Dachabdeckung auf dem Boden der Ladefläche liegt. Die Rückwand und die Dachabdeckung bilden sowohl in der Schließsteilung als auch in der Öffnungsstellung einen Winkel von 90°.

Ähnliche Pickup-Fahrzeuge mit öffnungsfähigem Dach sind ferner aus US 4 750 778, US 4 805 958 sowie US 5 906 408 bekannt.

Aus der US 5 058 857 ist ein Pickup-Fahrzeug mit einer Dachabdeckung für die Fahrerkabine bekannt, bei dem die Dachabdeckung aus der Schließstellung in eine Ablagestellung gebracht werden kann, in welcher sie im wesentlichen senkrecht hinter dem Fahrersitz in einer entsprechenden Aufnahme liegt.

Es ist Aufgabe der vorliegenden Erfindung, ein Kraftfahrzeug der eingangs genannten Art zu schaffen, bei welchem in der Öffnungsstellung die Dachabdeckung und die Rückwand möglichst platzsparend angeordnet sind.

Diese Aufgabe wird erfindungsgemäß durch ein Kraftfahrzeug gemäß Anspruch 1 gelöst. Bei dieser Lösung ist vorteilhaft, dass in der Öffnungsstellung eine besonders platzsparende Ablage der Dachabdeckung und der Rückwand erzielt wird, während die Ladefläche weiterhin genutzt werden kann.

Bevorzugte Ausgestaltungen der Erfindung ergeben sich aus den Unteransprüchen.

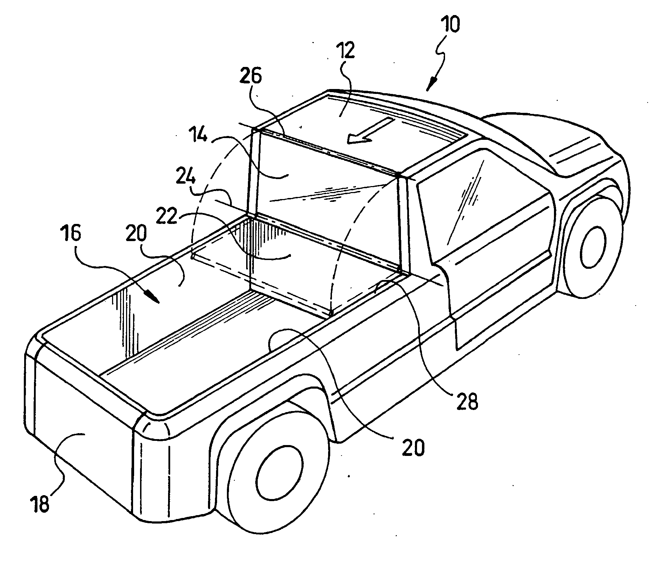

Im Folgenden wird die Erfindung anhand der beigefügten Zeichnung beispielhaft näher erläutert, welche eine schematische perspektivische Ansicht eines erfindungsgemäßen Fahrzeugs mit öffnungsfähigem Dach zeigt.

Gemäß der einzigen Figur ist die Fahrerkabine 10 eines Pickup-Fahrzeugs mit einer Dachabdeckung 12 und einer Rückwand 14 versehen. Hinter der Fahrerkabine 10 ist eine Ladefläche 16 angeordnet, die von einer Rückwand 18, zwei Seitenwänden 20 sowie einer Vorderwand 22 begrenzt wird.

Die Rückwand 14 der Fahrerkabine 10 wird von einer Heckscheibe gebildet, welche um eine in Fahrzeugquerrichtung verlaufende Schwenkachse 24 schwenkbar ist, die auf dem Niveau der Oberkante der Seitenwände 20 bzw. der Vorderwand 22 der Ladefläche 18 liegt. Die Rückwand 14 und die Dachabdeckung 12 sind mit einer Scharnierverbindung 26 miteinander verbunden, so dass die Dachabdeckung 12 bezüglich der Rückwand 14 um eine in Dachquerrichtung verlaufende Achse 26 schwenkbar bzw. klappbar ist. Die Schwenkachse 28 verläuft dabei im Bereich des hinteren Endes der Dachabdeckung 12.

Ausgehend von der in der einzigen Figur dargestellten Schließstellung der Dachabdeckung 12 und der Rückwand 14, in welcher die Fahrerkabine nach oben und nach hinten verschlossen wird, kann die Fahrerkabine 10 nach oben und nach hinten freigelegt werden, indem die Rückwand 14 um die Schwenkachse 24 in der in der einzigen Figur mittels gestrichelter Linien angedeuteten Weise um etwa 90° nach hinten geschwenkt wird, wobei die Dachabdeckung 12 ihre horizontale Orientierung im wesentlichen beibehält, so dass zwischen der Rückwand 14 und der Dachabdeckung 12 eine Klappbewegung stattfindet, an deren Ende die Dachabdeckung 12 und die Rückwand 14 im wesentlichen parallel zueinander aufeinander geklappt sind. In dieser Öffnungsstellung bzw. Ablagestellung liegen die Rückwand 14 und die Dachabdeckung 12 in im wesentlichen horizontaler Ausrichtung aufeinander. Sie befinden sich dabei auf dem Niveau der Oberkante 28 der Seitenwände 20 bzw. der Vorderwand 24 der Ladefläche 16.

### Bezugszeichenliste

- 10: Fahrerkabine
- 12: Dachabdeckung
- 14: Rückwand bzw. Heckscheibe von 10
- 16: Ladefläche
- 18: Rückwand von 16
- 20: Seitenwände von 16
- 22: Vorderwand von 16
- 24: Schwenkachse von 14
- 26: Schwenkachse von 12
- 28: Oberkante von 20

## Patentansprüche

1. Kraftfahrzeug mit einer Fahrerkabine (10) und einer hinter der Fahrerkabine angeordneten Ladefläche (16), die vorne von einer Vorderwand (22) und seitlich von Seitenwänden (20) begrenzt ist, wobei die Fahrerkabine ein öffnungsfähiges Dach mit einer zwischen einer Schließstellung und einer Öffnungsstellung verstellbaren Dachabdeckung (12) sowie eine Rückwand (14) aufweist, die bezüglich der Fahrerkabine um eine in Fahrzeugquerrichtung verlaufende Achse (24) schwenkbar ist, wobei die Dachabdeckung und die Rückwand scharnierartig klappbar miteinander verbunden sind, und wobei die Dachabdeckung in der Öffnungsstellung auf die Rückwand geklappt ist und die Dachabdeckung und die Rückwand in dieser Stellung im Bereich der Ladefläche im wesentlichen horizontal auf dem Niveau der Oberkante (28) der Seitenwände (20) abgelegt sind.

2. Kraftfahrzeug nach Anspruch 1, **dadurch gekennzeichnet, dass** die Rückwand (14) von einer Heckscheibe gebildet ist.

3. Kraftfahrzeug nach Anspruch 1 oder 2, **dadurch gekennzeichnet, dass** die Rückwand (14) und die Dachabdeckung (12) in der Schließstellung einen Winkel von etwa 90° bilden.

## Claims

1. A motor vehicle comprising a driver's cab (10) and a loading area (16) which is disposed behind the driver's cab and is delimited by a front wall (22) at its front side and by side walls (20) at its sides, wherein the driver's cab comprises an openable roof and a rear wall (14), said roof including a roof covering (12) adapted to be moved between a closed position and an open position and said rear wall being adapted to be pivoted relative to the driver's cab about an axis (24) extending in the transverse direction of the vehicle, wherein the roof covering and the rear wall are foldably hingedly interconnected, wherein the roof covering, in the open position thereof, is folded onto the rear wall, and wherein, in this position, the roof covering and the rear wall are deposited substantially horizontally in the range of the loading area at the level of the upper edge (28) of the side walls (20).

2. The motor vehicle of claim 1, **characterized in that** the rear wall (14) is defined by a rear window.

3. The motor vehicle of claim 1 or 2, **characterized in that** the rear wall (14) and the roof covering (12), in the closed position, define an angle of about 90°.

## Revendications

1. Véhicule automobile comprenant une cabine de conduite (10) et une plate-forme de chargement (16) située derrière la cabine de conduite, qui est délimitée à l'avant par une paroi avant (22) et sur les côtés par des parois latérales (20), la cabine de conduite présentant un toit ouvrant doté d'un panneau d'obturation (12) qui peut passer d'une position fermée à une position ouverte, ainsi qu'une paroi arrière (14) pouvant pivoter par rapport à la cabine de conduite autour d'un axe (24) s'étendant dans la direction transversale du véhicule, le panneau d'obturation et la paroi arrière étant reliés entre eux en formant une charnière, de manière à pouvoir être rabattus l'un sur l'autre, et le panneau d'obturation en position ouverte étant rabattu sur la paroi arrière, le panneau d'obturation et la paroi arrière reposant dans cette position de façon essentiellement horizontale dans la zone de la plate-forme de chargement, à la hauteur de l'arête supérieure (28) des parois latérales (20).

2. Véhicule automobile selon la revendication 1, **caractérisé en ce que** la paroi arrière (14) est formée par une lunette arrière.

3. Véhicule automobile selon la revendication 1 ou 2, **caractérisé en ce que** la paroi arrière (14) et le panneau d'obturation (12) forment, en position fermée, un angle d'environ 90°.
